# EUROPÄISCHE PATENTSCHRIFT

(11) **EP 1 474 493 B1**
(45) Veröffentlichungstag und Bekanntmachung des Hinweises auf die Patenterteilung: **21.11.2007**
(21) Anmeldenummer: 03706486.2
(22) Anmeldetag: 12.02.2003
(51) Int. Cl.: C09J 133/08, C09F 1/04, C09J 11/08

(54) **EMISSIONSARMER WÄSSRIGER DISPERSIONS-KLEBSTOFF**
LOW-EMISSION AQUEOUS DISPERSION ADHESIVE
COLLE EN DISPERSION AQUEUSE A FAIBLE TAUX D'EMISSION

(30) Priorität: 13.02.2002 DE 10205893
(43) Veröffentlichungstag der Anmeldung: 10.11.2004
(73) Patentinhaber: Henkel KGaA, 40191 Düsseldorf (DE); Arizona Chemical, 1322 CE Almere (NL)
(72) Erfinder: TAMCKE, Thomas, 40593 Düsseldorf (DE); RIJSDIJK, Henk, NL-1705DS Heerhugoward (NL); HONKANEN, Kari, FIN-90580 Oulu 58 (FI)
(74) Vertreter: Fiesser, Gerold Michael
(86) Internationale Anmeldenummer: PCT/EP2003/001387
(87) Internationale Veröffentlichungsnummer: WO 2003/068885

(56) Entgegenhaltungen:
- DE-A- 1 953 582
- DE-A- 2 064 488
- US-A- 4 183 834
- DATABASE WPI Section Ch, Week 199046 Derwent Publications Ltd., London, GB; Class A14, AN 1990-344661 XP002248890 & JP 02 248481 A (HARIMA KASEI KK), 4. Oktober 1990 (1990-10-04)

## Beschreibung

Die Erfindung betrifft einen emissionsarmen Dispersions-Klebstoff auf der Basis von Polymeren mit einem Zusatz eines mit Carboxylgruppen modifizierten Tallharzes. Der Klebstoff zeichnet sich durch besondere Emissionsarmut aus und hat sonst die im wesentlichen identischen Eigenschaften eines Klebstoffs mit Anteilen an hochsiedenden Lösemittelbestandteilen, insbesondere bezüglich Verstreichbarkeit, Anfangsklebkraft und offener Zeit. Der Klebstoff eignet sich sehr gut zum Verkleben von Fußbodenbelägen.

Dispersions-Klebstoffe und deren Anwendung, insbesondere in Abmischung mit klebrig machenden Harzen (Tackifiern), sind bekannt. So wird in der EP 0 490 191 A2 eine Klebstoffzusammensetzung beschrieben, die A) einen wässrigen Acrylat-Klebstoff und B) eine Mischung aus einem klebrigmachenden Harz und einer Verbindung der allgemeinen Formel R¹-O-(X-O)ₙ-R² enthält, in der X ein Alkylen mit 2 bis 4 C-Atomen, n eine ganze Zahl von 1 bis 8 und R' und R² Wasserstoff oder ein Aryl- oder Alkarylrest mit 6 bis 12 C-Atomen sind, wobei R' und R² nicht gleichzeitig Wasserstoff sind.

Um die Klebekraft von festen Balsamharzen in Dispersionsklebstoffen nutzen zu können, müssen die Harze in eine flüssige Form gebracht werden. Dies kann beispielsweise durch Lösen der Harze in aromatischen Lösemitteln erreicht werden. Derartige Harzlösungen werden dann beispielsweise einer gegebenenfalls bereits mit Additiven versehenen Polymerdispersion zugegeben.

Moderne, lösemittelfreie Dispersionsklebstoffe enthalten ebenfalls Balsamharze. Um jedoch das Emissionsverhalten solcher Klebstoffe nicht nachteilig zu verändern, werden der Dispersion keine Harzlösungen, sondern sogenannte Harzschmelzen zugesetzt. Zur Herstellung derartiger Harzschmelzen werden statt niedrigsiedender Lösemittel beispielsweise Lösemittel mit einem Siedepunkt von mehr als 200 °C eingesetzt. Bei derartigen Harzmischungen aus Harzen und einem Weichmacher bzw. einem hochsiedenden Lösemittel sind die erhaltenen Klebstoffe umso emissionsärmer, je geringer der Anteil dieser Stoffe im Klebstoff und je höher das Molekulargewicht des Weichmachers bzw. des hochsiedenden Lösemittels ist. Da die Viskosität derartiger Zubereitungen jedoch für ein Einarbeiten der Zubereitungen in eine Polymerdispersion bei Raumtemperatur zu hoch ist, muss die Zubereitung vor Zugabe zur Polymerdispersion erwärmt werden.

Will man Klebstoffe mit einem äußerst niedrigen Emissionswert herstellen, so ist der Einsatz der obengenannten hoch siedenden Lösemittel nicht ausreichend. Hierzu sind nur noch Stoffe geeignet, die einen Siedepunkt von mehr als 300 °C, vorzugsweise mehr als 350 °C aufweisen. Diese Stoffe, beispielsweise die klassischen Weichmacher wie Phthalate oder Benzoate weisen jedoch häufig den Nachteil auf, dass die Viskosität der Harzzubereitungen derart hoch ist, dass die Temperatur bei der Einarbeitung in den Klebstoff ebenfalls sehr hoch gewählt werden muss. Durch Erhöhung des Anteils an Weichmacher bzw. eines hoch siedenden Lösemittels kann die Viskosität der Harzmischung zwar gesenkt werden, jedoch werden dann auch wesentliche Eigenschaften der daraus hergestellten Klebstoffe gravierend verändert. So verschlechtern sich beispielsweise die rheologischen Eigenschaften (Viskosität, Verstreichbarkeit) des Klebstoffes und die offene Zeit wird häufig verkürzt. Hinzu kommt, dass der Einsatz solcher Harzschmelzen die klebrigmachende Wirkung des Harzes deutlich reduziert, so dass die gewünschten Klebeeigenschaften oft nicht mehr erreicht werden.

Ein weiterer Ansatz zur Lösung dieses Problems beruht auf dem Einsatz von Weichharzestern, deren Zusatz die Viskosität einer entsprechenden Harzzubereitung absenkt. Problematisch wirkt sich dabei aus, dass die Harzester auf Grund ihrer niedrigen Säurezahlen mit den üblicherweise eingesetzten Polymerdispersion nur schlecht verträglich sind. Häufig weisen unter Einsatz solcher Weichharzester hergestellte Klebstoffe daher Nachteile im Hinblick auf Stabilität und Klebekraft auf.

Aus der WO 98/56867 ist ein emissionsarmer wässriger Dispersionsklebstoff bekannt, der Polyacrylate, Zusätze von klebrigmachenden Harzen, Weichmachern bzw. schwer flüchtigen, hoch siedenden Lösemitteln sowie gegebenenfalls weitere Zusätze enthält. Die beschriebenen Klebstoffdispersionen enthalten ein Harzgemisch aus Balsam-Kolophonium und einem carboxylierten Kolophonium-Weichharzester. Die beschriebenen Klebstoffe zeigen zwar eine ausgezeichnete Klebkraft, sie weisen jedoch in anderer Hinsicht Nachteile auf Problematisch wirkt sich nämlich aus, dass der für die Harzmischung benötigte Rohstoff (Balsamharz) sehr hohe Emissionswerte aufweisen kann. Sollen die Emissionswerte gesenkt werden, muss dieser Rohstoff daher einem Verfahrensschritt unterzogen werden, bei dem leichtflüchtige Verbindungen aus dem Harz entfernt werden. Dies bedeutet jedoch zusätzlichen Aufwand, der sowohl in ökonomischer als auch in ökologischer Hinsicht zu vermeiden ist.

Während Balsamharz-Kolophonium durch die sogenannte Lebendharzung von Pinien, beispielsweise in Portugal, China oder Brasilien, gewonnen wird, ist das chemisch identische Tallharz-Kolophonium ein Nebenprodukt der Papierherstellung. Tallharz-Kolophonium und Balsamharz-Kolophonium unterscheiden sich jedoch bezüglich ihrer Inhaltsstoffe. Im Unterschied zu Balsamharz-Kolophonium ist das Tallharz-Kolophonium chemisch reiner, in der Regel emissionsärmer (bedingt durch die Aufbereitungsschritte bei der Gewinnung aus Holzabfällen) und steht in konstanter Qualität zur Verfügung.

Schon häufig wurde versucht, Tallharz-Kolophonium als Alternative zu Balsamharz-Kolophonium in Dispersionsklebstoffen einzusetzen. Durch die Reinheit des Tallharz-Kolophoniums bedingt, zeigt dieser Rohstoff jedoch eine starke Tendenz zur Kristallisation. Dies wiederum führt zu einer verringerten Klebekraft der Harze, so dass die Wirksamkeit eines Harzzusatzes auf Tallharz-Basis in der Regel höheren Anforderungen nicht genügte. Durchsetzen konnten sich nur einige voll veresterte Tallharze, beispielsweise Tallharz-Glycerinester. Deren Einsatz ist jedoch stark limitiert, da die Verträglichkeit dieser Harzester mit üblichen Polymerdispersionen eingeschränkt ist, und daher die gewünschten Klebeeigenschaften, beispielsweise die Nassklebkraft, nicht ausreichend ist.

Ausgehend von diesem Stand der Technik lag der vorliegenden Erfindung die Aufgabe zugrunde, die Emissionswerte eines harzhaltigen Klebstoffs noch weiter zu senken, ohne dass die sonstigen Eigenschaften bei der Herstellung und der Verarbeitung sowie die klebetechnischen Eigenschaften gegenüber Klebstoffen mit Balsamharzen verschlechtert werden. Das gilt insbesondere für die Einarbeitung des Harzes in die Polymerdispersion, die Viskosität und Verstreichbarkeit des Klebstoffes, die offene Zeit, die Anfangsklebkraft, die Endklebkraft und die Wärmestandfestigkeit der Klebung.

Es wurde nun gefunden, dass sich die oben genannten Aufgaben dadurch lösen lassen, dass ein carboxyliertes Tallharz als klebrigmachendes Harz eingesetzt wird.

Gegenstand der vorliegenden Erfindung ist daher ein emissionsarmer wässriger Dispersionsklebstoff, wobei der Dispersionsklebstoff ein carboxyliertes Tallharz enthält, mit den Merkmalen des Patentanspruchs 1.

Ein erfindungsgemäßer Dispersionsklebstoff enthält neben mindestens einem carboxylierten Tallharz eine wässrige Dispersion eines Polymeren oder eines Gemischs aus zwei oder mehr Polymeren.

Bei dem Polymeren oder dem Gemisch aus zwei oder mehr Polymeren handelt es sich vorzugsweise um radikalisch polymerisierte Polymere wie sie sich aus ethylenisch ungesättigten Monomeren erhalten lassen.

Das Polymer enthält vorzugsweise sog. Hauptmonomere, ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, nicht aromatischen Kohlenwasserstoffen mit mindestens 2 konjugierten Doppelbindungen oder Mischungen dieser Monomeren.

Die vorstehend genannten Monomeren bzw. Mischungen dieser Monomeren sind vorzugsweise zu 60 bis 100 Gew.-%, vorzugsweise 80 bis 100 Gew.-%, besonders bevorzugt 90 bis 99,8 Gew.-%, bezogen auf das Polymere, im Polymeren enthalten.

Im einzelnen zu nennen sind z.B. Acrylsäurealkylester oder Methacrylsäurealkylester mit einem C₁-C₁₂-Alkylrest, wie Methylmethacrylat, Methylacrylat, n-Butylacrylat, Ethylacrylat und 2-Ethylhexylacrylat. Insbesondere sind auch Polymere geeignet, sich durch Polymerisation von Gemischen von Acrylsäurealkylestern und (Meth)acrylsäurealkylestern erhalten lassen.

Zur Herstellung geeigneter Polymerer eignen sich beispielsweise auch die Vinylester von Carbonsäuren mit 1 bis 20 C-Atomen. Zur Herstellung geeigneter Polymerer geeignet sind z.B. Vinyllaurat, Vinylstearat, Vinylpropionat, Versaticsäurevinylester oder Vinylacetat oder Gemische aus zwei oder mehr davon.

Als vinylaromatische Verbindungen eignen sich beispielsweise Vinyltoluol, α- und p-Methylstyrol, α-Butylstyrol, 4-n-Butylstyrol, 4-n-Decylstyrol und Styrol. Beispiele für geeignete Nitrile sind Acrylnitril und Methacrylnitril.

Zur Herstellung geeigneter Polymerer eignen sich ebenfalls Vinylhalogenide, beispielsweise mit Chlor, Fluor oder Brom substituierte ethylenisch ungesättigte Verbindungen, wie Vinylchlorid oder Vinylidenchlorid oder deren Gemische.

Zur Herstellung geeigneter Polymerer eignen sich darüber hinaus nicht aromatische Kohlenwasserstoffe mit 2 bis 8 C-Atomen und mindestens zwei olefinischen Doppelbindungen wie Butadien, Isopren, und Chloropren.

Weitere Monomere, die z.B. von 0 bis 40 Gew.-%, vorzugsweise von 0 bis 20 Gew.-% und besonders bevorzugt von 0,2 bis 10 Gew.-% im Polymeren enthalten sein können, sind insbesondere C₁-C₁₀-Hydroxyalkyl(meth)acrylate, (Meth)acrylamid sowie dessen am Stickstoff mit C₁-C₄-Alkyl substituierten Derivate, ethylenisch ungesättigte Carbonsäuren, Dicarbonsäuren, deren Halbester und Anhydride, z.B. (Meth)acrylsäure, Maleinsäure, Fumarsäure, Maleinsäureanhydrid, Maleinsäure- und Fumarsäurehalbester und Itaconsäure.

Die Glasübergangstemperatur geeigneter Polymerer liegt vorzugsweise zwischen -50 und-10°C, beispielsweise zwischen -40°C und -15°C oder zwischen -15 und -30°C.

Die Glasübergangstemperatur des Polymeren lässt sich nach üblichen Methoden wie Differentialthermoanalyse oder Differential Scanning Calorimetrie (s. z.B. ASTM 3418/82, sog. "midpoint temperature") bestimmen.

Das Zahlenmittel des Molekulargewicht (Mₙ) der löslichen Anteile geeigneter Polymerer ist beispielsweise kleiner 30.000 oder kleiner als 20.000, beispielsweise kleiner als 15.000, wobei das Gewichtsmittel des Molekulargewichts (M_{W}) beispielsweise größer als 250.000 ist (bestimmt durch Gelpermeationschromatographie mit Polystyrol als Standard an einer Polymerlösung in Tetrahydrofuran nach Sedimentation der unlöslichen Bestandteile).

Mn liegt im allgemeinen jedoch nicht unter 5000 g/mol und M_{W} liegt im allgemeinen nicht über 800.000 g/mol.

Die Herstellung des Polymeren erfolgt beispielsweise durch radikalische Polymerisation. Geeignete Polymerisationsmethoden, wie Substanz-, Lösungs-, Suspensions- oder Emulsionspolymerisation sind dem Fachmann bekannt.

Vorzugsweise wird das Copolymerisat durch Lösungspolymerisation mit anschließender Dispergierung in Wasser oder besonders bevorzugt durch Emulsionspolymerisation hergestellt, so dass wässrige Polymerdispersionen entstehen.

Die Emulsionspolymerisation kann diskontinuierlich, mit oder ohne Verwendung von Saatlatices, unter Vorlage aller oder einzelner Bestandteile des Reaktionsgemisches, oder bevorzugt unter teilweiser Vorlage und Nachdosierung der oder einzelner Bestandteile des Reaktionsgemisches, oder nach dem Dosierverfahren ohne Vorlage durchgeführt werden.

Die Monomeren können bei der Emulsionspolymerisation wie üblich in Gegenwart eines wasserlöslichen Initiators und eines Emulgators bei vorzugsweise 30 bis 95°C polymerisiert werden.

Geeignete Initiatoren sind z.B. Natrium-, Kalium- und Ammoniumpersulfat, tert.-Butylhydroperoxide, wasserlösliche Azoverbindungen oder auch Redoxinitiatoren wie H₂O₂/Ascorbinsäure.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate. Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht.

Im Falle von wässrigen Sekundärdispersionen wird das Copolymerisat zunächst durch Lösungspolymerisation in einem organischen Lösungsmittel hergestellt und anschließend unter Zugabe von Salzbildnern, z.B. von Ammoniak zu Carbonsäuregruppen enthaltenden Copolymerisaten, in Wasser ohne Verwendung eines Emulgators oder Dispergierhilfsmittels dispergiert. Das organische Lösungsmittel kann abdestilliert werden. Die Herstellung von wässrigen Sekundärdispersionen ist dem Fachmann bekannt und z.B. in der DE-A-37 20 860 beschrieben.

Zur Einstellung des Molekulargewichts können bei der Polymerisation Regler eingesetzt werden. Geeignet sind z.B. -SH enthaltende Verbindungen wie Mercaptoethanol, Mercaptopropanol, Thiophenol, Thioglycerin, Thioglykolsäureethylester, Thioglykolsäuremethylester und tert.-Dodecylmercaptan.

Der Feststoffgehalt der erhaltenen Polymerdispersionen beträgt vorzugsweise 40 bis 80, besonders bevorzugt 45 bis 75 Gew.-%. Hohe Polymerfeststoffgehalte können z.B. nach Verfahren, welche in der deutschen Patentanmeldung P 4 307 683.1 oder der EP 37 923 beschrieben sind, eingestellt werden.

Erfindungsgemäß besonders geeignete Polyacrylat-Dispersionen werden zum Beispiel in der EP 0 490 191 A2 beschrieben. Demnach besteht das Polyacrylat zum großen Teil aus Acrylaten und/oder Methacrylaten von 1 bis 24 C-Atomen enthaltenden Alkoholen. Im allgemeinen sind diese Monomerbausteine zu mehr als 25 Gew.-% in dem Polyacrylat enthalten. Weitere Monomerbausteine sind zum Beispiel: Vinyl- und Allylester von Carbonsäuren mit 1 bis 20 C-Atomen, Vinylether von Alkoholen mit 1 bis 8 C-Atomen, vinylaromatische Verbindungen, Vinylhalogenide, nicht aromatische Kohlenwasserstoffe mit 2 bis 8 C-Atomen und mindestens einer olefinischen Doppelbindung, α,β-ungesättigte Mono- oder Dicarbonsäuren mit 3 bis 6 C-Atomen sowie deren Derivate (vor allem Amide, Ester und Salze). Die Gewichtsanteile der Monomerbausteine werden so gewählt, daß das Polyacrylat eine Glasübergangstemperatur von -60 bis 0 °C aufweist, vorzugsweise von -50 bis -10 °C. Zu weiteren Einzelheiten und vor allem zu der Herstellung der wässrigen Polyacrylat-Dispersionen sei auf die EP 0 490 191 A2 oder die DE 198 01 892 A1 verwiesen.

Es können im Rahmen der vorliegenden Erfindung jedoch auch Polyacrylat-Dispersionen gemäß der EP 0 620 243 verwendet werden.

Der Feststoffgehalt der wässrigen Polyacrylat-Dispersionen liegt vorzugsweise im Bereich von 40 bis 65 Gew.-% gemessen nach DIN 53189.

Geeignete kommerziell erhältliche Dispersionen sind beispielsweise Arconal® A323, Arconal® A 378, Arconal® A 380 (Hersteller : BASF), Airflex® EAF 60, Airflex® EAF 67 (Hersteller: APP), Mowilith® DM 1340 (Hersteller: Clariant), Primal® CA 162 oder Primal® CA 172 (Hersteller: Rohm & Haas).

Bei dem erfindungsgemäß beschriebenen carboxylierten Tallharz-Kolophonium handelt es sich um ein modifiziertes Tallharz. Es weist bei 40 °C eine dynamische Viskosität von 10 bis 80 Pa*s nach DIN 53214 auf. Das carboxylierte Tallharz-Kolophonium weist eine Säurezahl im Bereich von 10 bis 140, vorzugsweise 110 bis 130 mg KOH/g nach DIN 53402 oder einen Erweichungspunkt (Ring und Ball) von etwa 35 bis etwa 70 °C, insbesondere von etwa 40 bis etwa 70 °C, insbesondere etwa 50 bis etwa 60 °C auf. Der Harzester kann sowohl gesättigt als auch ungesättigt sein.

Der teilveresterte Kolophonium-Weichharzester kann z.B. durch Veresterung von Tallharz-Kolophonium mit einer Säurezahl von ca. 160 bis 180 mg KOH/g und einem Gehalt an freien Harzsäuren von etwa 80 bis etwa 95 Gew.-% durch Diole wie Di- oder Triethylenglykol mit anschließender Teilveresterung der OH-Gruppen durch Säureanhydride, wie z.B. Maleinsäureanhydrid erhalten werden.

Im Rahmen der vorliegenden Erfindung wird in dem erfindungsgemäßen wässrigen Dispersionsklebstoff ein carboxyliertes Tallharz-Kolophonium eingesetzt, das sich nach einem neuen mehrstufigen Verfahren erhalten lässt.

Das Verfahren zur Herstellung des carboxylierten Tallharz-Kolophoniumderivats läuft in mehreren Schritten ab, wobei
a) in einem ersten Schritt ein Tallharz-Kolophonium mit einer olefinisch ungesättigten Carbonsäure umgesetzt wird,
b) in einem weiteren Schritt ein Disproportionierungsmittel zugegeben wird,
c) in einem weiteren Schritt ein Polyol zugegeben wird und
d) in einem weiteren Schritt ein Neutralisierungsmittel zugegeben wird.

Dabei wird beispielsweise zunächst im Rahmen einer ersten Stufe das Harz in einer inerten Atmosphäre auf eine Temperatur von etwa 120 bis etwa 280 °C gebracht. Anschließend wird dem erhitzten Harz eine ungesättigte Carbonsäuren oder ein Anhydrid einer ungesättigten Carbonsäure zugesetzt. Die Säure wird vorzugsweise bei einer Temperatur von etwa 180 bis etwa 250, insbesondere etwa 200 bis etwa 240 oder etwa 210 bis etwa 230 °C zugegeben. Die Reaktion zwischen der ungesättigten Carbonsäure oder einem Gemisch aus zwei oder mehr ungesättigten Carbonsäuren oder einem Anhydrid einer ungesättigten Carbonsäure oder einem Gemisch aus zwei oder mehr Anhydriden ungesättigter Carbonsäuren sollte für einen Zeitraum von etwa 20 bis etwa 150 oder etwa 30 bis etwa 120 Minuten, insbesondere für etwa 40 bis etwa 90 Minuten fortgeführt werden.

In einem zweiten Schritt wird das Reaktionsgemisch nun beispielsweise auf eine Temperatur von etwa 120 bis etwa 190 °C, beispielsweise etwa 130 bis etwa 180 oder etwa 140 bis etwa 160 °C abgekühlt. Wenn die gewünschte Temperatur erreicht ist, wird ein Disproportionierungsmittel zugegeben. Das Reaktionsgemisch wird für einen Zeitraum von etwa 10 bis etwa 80 oder etwa 10 bis etwa 60 Minuten, insbesondere für etwa 20 bis etwa 40 Minuten bei dieser Temperatur gehalten.

In einem dritten Schritt wird das Reaktionsgemisch beispielsweise auf eine Temperatur von etwa 230 bis etwa 280 °C, insbesondere auf eine Temperatur von etwa 245 bis etwa 255 °C gebracht und dem Reaktionsgemisch zur Veresterung ein Polyol zugegeben. Die Reaktionsdauer für die Veresterung sollte etwa 40 bis etwa 200, beispielsweise etwa 60 bis etwa 180 Minuten, insbesondere etwa 90 bis etwa 120 Minuten betragen.

In einem vierten Schritt wird das Reaktionsgemisch beispielsweise auf eine Temperatur von etwa 200 bis etwa 240, insbesondere etwa 210 bis etwa 230 °C gebracht und das Reaktionsgemisch mit einem Neutralisierungsmittel versetzt. Das derart behandelte Reaktionsgemisch wird für einen Zeitraum von etwa 30 bis etwa 100 Minuten, insbesondere etwa 50 bis etwa 70 Minuten auf der eingestellten Temperatur gehalten und anschließend aufgearbeitet.

Als ungesättigte Carbonsäuren eignen sich im Rahmen der vorliegenden Erfindung grundsätzlich alle Mono- oder Polycarbonsäuren, die mindestens eine olefinisch ungesättigte Doppelbindung aufweisen. Vorzugsweise werden jedoch ungesättigte Carbonsäuren eingesetzt, die höchstens etwa 12 C-Atomen aufweisen, insbesondere olefinisch ungesättigte Carbonsäuren mit etwa 4 bis etwa 10 C-Atomen. Im Rahmen einer weiteren bevorzugten Ausführungsform der vorliegenden Erfindung handelt es sich bei den ungesättigten Carbonsäuren um Dicarbonsäuren, insbesondere um Maleinsäure oder Fumarsäure oder deren Gemisch. Die Menge an ungesättigten Carbonsäuren beträgt, bezogen auf das eingesetzte Tallharz, etwa 1 bis etwa 10 Gew.-%, insbesondere etwa 2 bis etwa 8 oder etwa 3 bis etwa 5 Gew.%.

Als Disproportionierungsmittel eignen sich grundsätzlich alle Verbindungen, mit deren Hilfe die Reaktion zwischen Tallharz und Carbonsäure oder zwischen Tallharz und Carbonsäuregemisch abgebrochen werden kann. Besonders geeignet sind hierbei Verbindungen, die Radikale abfangen können. Derartige Verbindungen können im Rahmen der vorliegenden Erfindung einzeln oder als Gemisch aus zwei oder mehr geeigneter Verbindungen zugegeben werden. Im Rahmen einer bevorzugten Ausführungsform der vorliegenden Erfindung werden als Disproportionierungsmittel sterisch gehinderte, aromatische Phenole zugegeben. Im Rahmen einer besonders bevorzugten Ausführungsform der vorliegenden Erfindung wird als Disproportionierungsmittel 4,4'-Thiobis(3-methyl-6-tert-butylphenol) zusammen mit Jod zugegeben. Geeignete Disproportionierungsmittel werden im Rahmen der vorliegenden Erfindung in einer Menge von etwa 0,01 bis etwa 1 Gew.-%, insbesondere in einer Menge von etwa 0,05 bis etwa 0,5 Gew.-% zugegeben. Zusatzstoffe, welche den Abbruch der Reaktion unterstützen, beispielsweise Jod, werden vorzugsweise in einer Menge von etwa 0,01 bis etwa 1 Gew.%, insbesondere in einer Menge von etwa 0,08 bis etwa 0,5 Gew.-%, beispielsweise etwa 0,1 bis etwa 0,3 Gew.-%, bezogen auf die eingesetzte Menge an Tallharz, zugegeben.

Als Polyole eignen sich im Rahmen der vorliegenden Erfindung grundsätzlich alle Verbindungen, die über zwei oder mehr OH-Gruppen verfügen. Besonders geeignet sind dabei Polyole, deren Molekulargewicht bei weniger als etwa 500, insbesondere weniger als etwa 300 liegt. Besonders geeignet sind dabei Ethylenglykol, Diethylenglykol, Triethylenglykol, 1,2-Propandiol, Dipropylenglykol, die isomeren Butandiole, Hexandiole, Octandiole, technische Gemischen von Hydroxyfettalkoholen mit 14 bis 22 C-Atomen, Trimethylolpropan oder Glycerin oder Gemische aus zwei oder mehr der genannten Polyole. Die Polyole werden dem Reaktionsgemisch in einer Menge von etwa 0,5 bis etwa 10 Gew.-%, beispielsweise in einer Menge von etwa 1 bis etwa 7 oder etwa 2 bis etwa 4 Gew.-%, bezogen auf die eingesetzte Menge an Tallharz, zugegeben.

Als Neutralisierungsmittel eignen sich grundsätzlich alle Verbindungen, die mit den Carboxylgruppen im Tallharzderivat eine Neutralisierungsreaktion im Sinne einer Säure/Base-Reaktion eingehen. Geeignet sind beispielsweise anorganische Basen wie die Oxide oder Hydroxide der Alkali- oder Erdalkalimetalle, insbesondere der Alkalimetalle, beispielsweise LiOH, NaOH oder KOH.

Als Neutralisierungsmittel eignen sich weiterhin Amine, die unter Protonierung mit einer Carboxylgruppe umgesetzt werden können. Geeignete Amine sind beispielsweise primäre, sekundäre oder tertiäre Amine, die gegebenenfalls noch eine oder mehrere funktionelle Gruppen aufweisen können. Besonders geeignet sind Amine wie Trimethylamin, Triethylamin oder deren höhere Homologen oder Amine, die eine oder mehrere OH-Funktionalitäten aufweisen, beispielsweise Ethanolamin, Diethanolamin oder insbesondere Triethanolamin. Die Neutralisierungsmittel werden in einer Menge eingesetzt, die ausreicht, um das Reaktionsprodukt in den gewünschten Neutralisierungszustand zu versetzen. Vorzugsweise beträgt die Menge an Neutralisierungsmittel etwa 0,5 bis etwa fünf Gew.-% oder etwa 1 bis etwa 3 Gew.-%, bezogen auf die eingesetzte Menge an Tallharz.

Die so herstellbaren Tallharzderivate verfügen über ein Eigenschaftsprofil, das einen Einsatz der Tallharzderivate als Tackifier in Dispersionsklebstoffen erlaubt. Gegenstand der vorliegenden Erfindung sind daher auch Tallharzderivate, die nach einem erfindungsgemäßen Verfahren herstellbar sind.

Zur Herstellung eines erfindungsgemäßen Dispersionsklebstoffes werden die obengenannten Tallharzderivate in eine Polymerdispersion eingearbeitet. Wie bereits eingangs im Rahmen des vorliegenden Textes erläutert, wird dabei unter Berücksichtigung der Emissionswerte des entstehenden Klebstoffes eine Harzzubereitung eingesetzt, die im erfindungsgemäßen Fall ein erfindungsgemäßes Tallharzderivat oder ein Gemisch aus zwei oder mehr erfindungsgemäßen Tallharzderivaten wie sie oben beschrieben wurden und mindestens einen weiteren Zusatzstoff zur Erzeugung einer geeigneten Harzzubereitung umfasst.

Typische Zusatzstoffe sind: Kolophoniumharzester, beispielsweise Balsamkolophoniumester oder Tallharzester, Weichmacher oder hoch siedende Lösemittel oder Gemische aus zwei oder mehr davon.

Gegenstand der vorliegenden Erfindung ist daher auch eine Harzzubereitung, mindestens enthaltend ein erfindungsgemäßes Tallharzderivat und einen weiteren Zusatzstoff.

Eine erfindungsgemäße Harzzubereitung enthält dabei mindestens etwa 30 Gew.-% eines erfindungsgemäßen Tallharzderivats oder eines Gemischs aus zwei oder mehr erfindungsgemäßen Tallharzderivaten. Die Obergrenze für den Gehalt einer erfindungsgemäßen Harzzubereitung an erfindungsgemäßem Tallharzderivat oder Gemisch aus zwei oder mehr erfindungsgemäßen Tallharzderivaten beträgt etwa 85 Gew.-%, insbesondere etwa 80 oder etwa 75 Gew.-%. Vorzugsweise enthält eine erfindungsgemäße Harzzubereitung etwa 40 bis etwa 60 Gew.-% an erfindungsgemäßem Tallharzderivat oder Gemisch aus zwei oder mehr erfindungsgemäßen Tallharzderivaten.

Als Kolophoniumester können beispielsweise teilverestertes Balsamharz oder teilverestertes Tallharz verwendet werden. Geeignete Kolophonium-Weichharzester können beispielsweise carboxyliert sein. Geeignete Verbindungen sind beispielsweise in der WO 98/56867 auf den Seiten 4-5 beschrieben. Der Gehalt einer erfindungsgemäßen Harzzubereitung an Kolophonium-Weichharzester oder an Gemisch aus zwei oder mehr Kolophonium-Weichharzestern beträgt etwa 0 bis etwa 60 Gew.-%, insbesondere etwa 30 bis etwa 55 Gew.-%.

Bei den im Rahmen der vorliegenden Erfindung geeigneten Weichmachern handelt es sich gemäß DIN 55945 um flüssige oder feste indifferente organische Substanzen mit geringem Dampfdruck. Aufgrund ihres Löse- und Quellvermögens verringern sie die Härte des Polymeren und steigern sein Haftvermögen.

Als hochsiedende Lösemittel eignen sich inerte Verbindungen mit einem Siedepunkt im Bereich von 200 bis 300 °C. Besonders geeignet sind beispielsweise Phenoxyethanol, Phenoxypropanol, Butyldiglykolacetat.

Geeignete Weichmacher sind z.B. die in der EP 0 490 191 in der Beschreibungseinleitung zitierten Ether.

Vorzugsweise werden als Weichmacher Adipin- und Sebacinsäureweichmacher, Phosphorsäureweichmacher, Zitronensäureweichmacher, Fettsäureester und epoxidierte Fettsäureester, Fettalkohole, Polypropylenglykol, Polyethylenglykol, Benzoate oder Phthalate oder Gemische aus zwei oder mehr davon eingesetzt.

Besonders geeignet sind im Rahmen der vorliegenden Erfindung aromatische Weichmacher mit einer Siedetemperatur bei Normaldruck von mehr als 250 °C, vorzugsweise mehr als 300 °C und besonders bevorzugt mehr als 350 °C.

Als Fettsäureester eignen sich grundsätzlich alle Fettsäureester, welche die oben genannten Spezifikationen im Hinblick auf den Siedepunkt erfüllen. Besonders geeignet sind beispielsweise die Alkylester der Fettsäuren mit mehr als etwa 14 oder mehr als etwa 16 C-Atomen, beispielsweise die Alkylester von Laurin-, Myristin-, Stearin-, Arachin- und Behensäure sowie deren Gemische, wie sie aus natürlichen Fetten beziehungsweise gehärteten Ölen, wie Talg oder hydriertem Palmöl, erhältlich sind.

Der Alkoholteil der Carbonsäureester enthält einen ein- oder mehrwertigen Alkohol mit 1 bis 28 Kohlenstoffatomen in der Kohlenwasserstoffkette. Beispiele für geeignete Alkohole sind Methanol, Ethanol, Isopropanol, Butanol, 2-Ethylhexanol, Vinylalkohol, Erythrit oder Pentaerythrit. Bevorzugte Ester sind solche von Methanol, Ethanol, und Isopropanol, wobei der Säureteil des Esters insbesondere aus Behensäure, Stearinsäure, Ölsäure, Palmitinsäure oder Myristinsäure ausgewählt wird.

Als Fettalkohole eignen sich die Alkohole der oben genannten Fettsäuren, wie sie durch dem Fachmann bekannte Verfahren aus den Fettsäuren oder deren Estern erhältlich sind.

Der Gehalt einer erfindungsgemäßen Harzzubereitung an Fettsäureestern, epoxidierten Fettsäureestern oder Fettalkoholen oder Gemischen aus zwei oder mehr davon beträgt insgesamt etwa 0 bis etwa 30 Gew.-%, insbesondere etwa 0 bis etwa 15 Gew.-%.

Besonders als Zusatzstoffe geeignet sind im Rahmen der vorliegenden Erfindung Weichmacher und hochsiedende Lösemittel wie Dioctylphthalat, Diisononylphthalat, Diisodecylphthalat, Phthalsäureester mit überwiegend linearen C₆ bis C₁₂-Alkoholen, Dibutylphthalat, Diisobutylphthalat, Dicyclohexylphthalat, Dimethylphthalat, Diethylphthalat und Mischester aus Benzyl-butyl-, Butyl-octyl-, Butyl-decylphthalat und Dipentylphthalat, Dimethylglykolphthalat, Dicaprylphthalat, Diethylenglykol- und Dipropylenglykol-Dibenzoat oder Gemische aus zwei oder mehr davon.

Der Gehalt einer erfindungsgemäßen Harzzubereitung an Weichmachern oder hochsiedenden Lösemitteln oder Gemischen aus zwei oder mehr davon beträgt insgesamt etwa 0 bis etwa 30 Gew.-%, insbesondere etwa 0 bis etwa 15 Gew.-%.

Der Gehalt der erfindungsgemäßen Klebstoffe an erfindungsgemäßer Harzzubereitung beträgt im Rahmen der vorliegenden Erfindung etwa 1 bis etwa 40 Gew.-%, beispielsweise etwa 5 bis etwa 30 oder etwa 10 bis etwa 25 Gew.-%.

Der Anteil an Polymerdispersion am erfindungsgemäßen Klebstoff beträgt etwa 10 bis etwa 99 Gew.-%, wobei der Feststoffgehalt der Polymerdispersion innerhalb der oben genannten Grenzen liegt.

Ein erfindungsgemäßer Klebstoff kann weiterhin Filmbildungshilfsmittel, Konservierungsmittel, Entschäumer, Verdickungsmittel oder Füllstoffe oder Gemische aus zwei oder mehr davon enthalten.

Als Füllstoffe kommen im Rahmen einer weiteren Ausführungsform der vorliegenden Erfindung beispielsweise Carbonate (insbesondere Calciumcarbonat), Quarzmehl, Silikate (beispielsweise Talk, Ton, Glimmer), Kieselerde, Sulfate wie Calcium- oder Bariumsulfat oder Aluminiumhydroxid in Frage. Derartige Füllstoffe können in der erfindungsgemäßen wasserlöslichen Zusammensetzung beispielsweise in einer Menge von bis zu etwa 60, vorzugsweise von etwa 1 bis etwa 55 Gew.-% oder etwa 20 bis etwa 50 Gew.-%, bezogen auf den gesamten Dispersionsklebstoff, enthalten sein.

Bei den Füllstoffen handelt es sich vorzugsweise um feingemahlene Füllstoffe, insbesondere Kreide, mit einem mittleren Teilchendurchmesser von im allgemeinen 2 bis 10 µm. Quarzmehl wird vorzugsweise mit einem mittleren Teilchendurchmesser von 3 bis 20 µm eingesetzt.

Als Entschäumer eignen sich vorzugsweise Verbindungen auf der Basis von Mineralölen oder Silikonen. Als Verdicker werden vorzugsweise Verbindungen auf Basis von (Meth)acrylsäure-(Co)polymerisaten oder Cellulosederivaten oder deren Gemischen eingesetzt. Als Konservierungsmittel eignen sich übliche Konservierungsmittel, beispielsweise Benzisothiazolinon (BIT), Chlormethylisothiazolinon (CMIT) und dergleichen.

Im Rahmen einer bevorzugten Ausführungsform der vorliegenden Erfindung enthält ein erfindungsgemäßer Dispersionsklebstoff 20 bis 60 Gew.-% einer wässrigen Polymerdispersion, 1 bis 15 Gew.-% eines carboxylierten Tallharz-Kolophoniums und 15 bis 55 Gew.-% an Füllstoffen.

In einem erfindungsgemäßen Klebstoff können darüber hinaus anionische, kationische oder ampholytische Tenside, oder Gemische aus zwei oder mehr davon, enthalten sein. Beispiele für geeignete anionische Tenside sind Alkylsulfate, insbesondere solche mit einer Kettenlänge von etwa 8 bis etwa 18 C-Atomen, Alkyl- und Alkarylethersulfate mit etwa 8 bis etwa 18 C-Atomen im hydrophoben Rest und 1 bis etwa 10 Ethylenoxid (EO) oder Propylenoxid (PO) Einheiten, oder deren Gemisch, im hydrophilen Teil des Moleküls, Sulfonate, insbesondere Alkylsulfonate, mit etwa 8 bis etwa 18 C-Atomen, Alkylarylsulfonate mit etwa 8 bis etwa 18 C-Atomen, Tauride, Ester und Halbester der Sulfobernsteinsäure mit einwertigen Alkoholen oder Alkylphenolen mit 4 bis etwa 15 C-Atomen, die gegebenenfalls mit 1 bis etwa 20 EO-Einheiten ethoxyliert sein können, Alkali- und Ammoniumsalze von Carbonsäuren, beispielsweise von Fettsäuren oder Harzsäuren mit etwa 8 bis etwa 32 C-Atomen oder deren Gemischen, Phosphorsäurepartialester und deren Alkali- und Ammoniumsalze.

Beispiele für kationische Tenside sind Salze von primären, sekundären oder tertiären Fettaminen mit etwa 8 bis etwa 24 C-Atomen mit Essigsäure, Schwefelsäure, Salzsäure oder Phosphorsäuren, quaternäre Alkyl- und Alkylbenzolammoniumsalze, insbesondere solche, deren Alkylgruppen etwa 6 bis etwa 24 C-Atome aufweisen, insbesondere die Halogenide, Sulfate, Phosphate oder Acetate, oder Gemische aus zwei oder mehr davon, Alkylpyridinium-, Alkylimidazolinium- oder Alkyloxazolidiniumsalze, insbesondere solche, deren Alkylkette bis zu etwa 18 C-Atome aufweist, beispielsweise die Halogenide, Sulfate, Phosphate oder Acetate, oder Gemische aus zwei oder mehr davon.

Beispiele für ampholytische Tenside sind langkettig substituierte Aminosäuren wie N-Alkyl-di(aminoethyl)glycin oder N-Alkyl-2-aminopropionsäuresalze, Betaine, wie N-(3-acylamidopropyl)-N,N-dimethylammoniumsalze mit einem C₈₋₁₈-Acylrest oder Alkylimidazoliumbetaine.

In einer bevorzugten Ausführungsform der vorliegenden Erfindung enthält ein erfindungsgemäßer Klebstoff anionische Tenside. Besonders geeignet sind hierbei die Alkalisalze, insbesondere das Na-Salz der C_{12/14}-Fettalkoholethersulfate, Alkylphenolethersulfate, insbesondere deren Alkali- oder NH₄-Salze, Na-n-Dodecylsulfat, Di-K-Ölsäuresulfonat (C₁₈), Na-n-alkyl-(C₁₀C₁₃)-benzolsulfonat, Na-2-Ethylhexylsulfat, NH₄-Laurylsulfat (C_{8/14}), Na-Laurylsulfat (C_{12/14}), Na-Laurylsulfat (C_{12/16}), Na-Laurylsulfat (C_{12/18}), Na-Cetylstearylsulfat (C_{16/18}), Na-Oleylcetylsulfat (C_{16/18}), Sulfobernsteinsäuremonoester-di-Na-Salz, Fettalkoholsulfosuccinatdi-Na-Salz, Dialkylsulfosuccinat-Na-Salz oder Di-Na-Sulfosuccinamat oder Gemische aus zwei oder mehr davon.

Wenn ein erfindungsgemäßer Klebstoff ionische Tenside enthält, so sind sie in einer bevorzugten Ausführungsform der Erfindung in einer Menge von bis zu etwa 5 Gew.-% oder weniger, beispielsweise bis zu etwa 2 Gew.-% oder etwa 1 Gew.-% oder weniger, bezogen auf den gesamten Klebstoff, enthalten. Gegebenenfalls können auch geringere Mengen an ionischem Tensid enthalten sein, beispielsweise bis zu etwa 0,5 Gew.-% oder darunter, beispielsweise etwa 0,2 Gew.-%, 0,1 Gew.-% oder 0,05 Gew.-%.

In einer weiteren Ausführungsform der vorliegenden Erfindung kann ein erfindungsgemäßer Klebstoff mindestens ein nichtionisches Tensid enthalten. Beispiele für geeignete nichtionische Tenside sind Alkylpolyglykolether, vorzugsweise solche mit etwa 8 bis etwa 20 EO-Einheiten und Alkylresten mit etwa 8 bis etwa 20 C-Atomen, Alkylarylpolyglykolether, vorzugsweise solche mit etwa 8 bis etwa 40 EO-Einheiten und etwa 8 bis etwa 20 C-Atomen in den Alkyl- oder Arylresten, Ethylenoxid/Propylenoxid (EO/PO)-Blockcopolymere, vorzugsweise solche mit etwa 8 bis etwa 40 EO- bzw. PO-Einheiten, Additionsprodukte von Alkylaminen mit Alkylresten von etwa 8 bis etwa 22 C-Atomen mit Ethylenoxid oder Propylenoxid, Fett- und Harzsäuren mit etwa 6 bis etwa 32 C-Atomen, Alkylpolyglykoside mit linearen oder verzweigten, gesättigten oder ungesättigten Alkylresten mit im Mittel etwa 8 bis etwa 24 C-Atomen und einem Oligoglykosidrest mit etwa 1 bis etwa 10 Hexose- oder Pentoseeinheiten im Mittel oder Gemische aus zwei oder mehr davon, Naturstoffe und deren Derivate wie Lecithin, Lanolin oder Sarkosin, polare Gruppen enthaltende lineare Organo(poly)siloxane, insbesondere solche mit Alkoxygruppen mit bis zu etwa 10 C-Atomen und bis zu etwa 20 EO- oder PO-Gruppen.

Weitere geeignete nichtionische Tenside sind beispielsweise Nonylphenolethoxylate, Octylphenolethoxylate, C_{12/14}-Fettalkoholethoxylate, Oleylcetylethoxylate, C_{16/18}-Fettalkoholethoxylate, Cetylstearylethoxylate, ethoxylierte Triglyceride, Sorbitanmonolaurat, Sorbitanmonooleat, Sorbitan-20EO-monooleat, Sorbitan-20EO-monostearat oder Gemische aus zwei oder mehr davon.

Wenn der erfindungsgemäße Klebstoff nichtionische Tenside enthält, so sind diese vorzugsweise höchstens in einer Menge von bis zu etwa 5 Gew.-% oder weniger, beispielsweise bis zu etwa 2 Gew.-% oder etwa 1 Gew.-%, oder weniger, bezogen auf den gesamten Klebstoff, enthalten. Gegebenenfalls können auch geringere Mengen an nichtionischem Tensid enthalten sein, beispielsweise bis zu etwa 0,5 Gew.-% oder darunter, beispielsweise etwa 0,2 Gew.-%, 0,1 Gew.-% oder 0,05 Gew.-%.

Zur Herstellung der erfindungsgemäßen Klebstoffe werden beispielsweise 5 bis 25, vorzugsweise 10 bis 20 Gewichtsanteile einer erfindungsgemäßen Harzzubereitung mit 10 bis 60, vorzugsweise 15 bis 45 Gewichtsanteilen wässriger Polymerdispersion, vorzugsweise mit einem Feststoffgehalt von 55 bis 65 Gew.-%, und mit 15 bis 55, vorzugsweise 20 bis 50 Gewichtsanteilen an Füllstoffen gemischt. Die übrigen möglichen Zusätze spielen gewichtsmäßig eine untergeordnete Rolle. Die Komponenten lassen sich ohne Probleme unter den üblichen Bedingungen (vor allem bei Temperaturen zwischen 70 und 80 °C) zu dem erfindungsgemäßen wässrigen Dispersionsklebstoff verarbeiten.

Gegenstand der vorliegenden Erfindung ist daher auch ein Verfahren zur Herstellung von erfindungsgemäßen Klebstoffen, bei dem ein carboxyliertes Tallharz-Kolophoniumderivat mit einer wäßrigen Dispersion eines Polymeren vermischt wird. Im Rahmen einer bevorzugten Ausführungsform der vorliegenden Erfindung wird das carboxyliert Tallharz-Kolophoniumderivat in Form einer erfindungsgemäßen Harzzubereitung mit der wässrigen Dispersion eines Polymeren vermischt.

Im allgemeinen wird der erfindungsgemäße Dispersionsklebstoff folgendermaßen hergestellt: Die wäßrige Polyacrylat-Dispersion wird bei 10 bis 90 °C im Rührwerk vorgelegt und Zusätze wie Entschäumer, Konservierungsmittel, Verdicker, Emulgatoren und Wasser sowie der Füllstoff unter Rühren zugegeben. Dann wird unter kräftigem Rühren die auf 70 bis 100 °C erwärmte erfindungsgemäße Harzzubereitung portionsweise oder kontinuierlich zugegeben. Schließlich wird die Viskosität durch Zusatz von Verdicker bzw. Wasser reguliert.

Der erfindungsgemäße Dispersionsklebstoff eignet sich insbesondere als Klebstoff zum Verkleben von Substraten aus Kunststoff, Holz, Metall, Textilien aus gewebten und oder ungewebten Fasern. Er eignet sich insbesondere als Fußbodenkleber, insbesondere zum Kleben von Bodenbelägen auf Untergründen aus Holz, Kunststoff oder insbesondere mineralischen Untergründen, wie Estrich, Beton, zementären Ausgleichsmassen oder Ausgleichsmassen auf Gipsbasis oder keramischen Fliesen.

Ganz besonders eignet sich der erfindungsgemäße Klebstoff als Fußbodenkleber für Teppichböden oder sonstige Bodenbeläge z.B. aus PVC (in Ausführungen als Mehrschichtbeläge oder Homogenbeläge), Schaumstoffbeläge mit Textilunterseite (z.B. Jute), Polyestervlies, Gummibeläge, Textilbeläge, z.B. auch mit unterschiedlicher Rückenausstattung (wie Polyurethanschaum, Styrol-Butadien-Schaum, textiler Zweitrücken), Nadelfilzbodenbeläge, Polyolefinbeläge oder Linoleumbeläge, auf Untergründen wie Holz, Estrich, Beton, keramische Fliesen, Metalluntergründe, zementäre Ausgleichsmassen oder Ausgleichsmassen auf Gipsbasis oder keramische Fliesen oder ähnliches.

Der erfindungsgemäße Klebstoff kann z.B. mit einer Zahnleiste auf den Untergrund aufgetragen werden. Nach dem üblichen Ablüften wird der Bodenbelag eingelegt. Der erfindungsgemäße Klebstoff weist ein gutes Niveau von anwendungstechnischen Eigenschaften wie Schälfestigkeit, Scherfestigkeit, Nassanzugsvermögen, Trockenanfassvermögen und Wärmestandfestigkeit auf.

Je nach Anwendungsgebiet sollte der erfindungsgemäße wässrige Dispersionsklebstoff auf Polyacrylatbasis unterschiedlichen Anforderungen genügen. Für die Verklebung von Fußbodenbelägen sind folgende Kenndaten des Klebstoffes von Bedeutung: Die Viskosität nach Brookfield HBT, Spindel 4, 20 U/min (ISO2555) sollte mehr als 15.000, vorzugsweise mehr als 18.000 bis max. etwa 40.000, insbesondere etwa 20.000 bis etwa 30.0000 mPa*s betragen.

Die Anfangsklebkraft (Tack) sollte mehr als 3 (Note), vorzugsweise mehr als 2 (Note) betragen.

Die offene Zeit sollte mehr als 15, vorzugsweise mehr als 20 bis maximal 40 Minuten betragen. Eine offene Zeit unter 10 Minuten wird als ungenügend bezeichnet.

Die erfindungsgemäßen Dispersionsklebstoffe erfüllen diese Anforderungen und zeichnen sich darüber hinaus durch eine gute Verstreichbarkeit (Rheologie) und ungewöhnlich hoher Endfestigkeiten aus. Darüber hinaus sind sie deutlich emissionsärmer, was auch an dem merkbar verringertem Geruch festgestellt werden kann und insbesondere in geeigneten Prüfkammern bestimmbar ist.

Der erfindungsgemäße Klebstoff eignet sich aufgrund der hervorragenden Eigenschaften besonders gut zum Verkleben von Fußbodenbelägen. Dazu wird er z.B. mit einer Zahnleiste auf dem Untergrund aufgetragen. Nach dem üblichen Ablüften wird der Bodenbelag eingelegt.
Die Erfindung wird nun anhand von Beispielen im Einzelnen erläutert.

### Beispiele

### 1. Herstellung eines carboxylierten Tallharz-Kolophoniums

1000 g Tallharz (Schmelzpunkt: 66 °C, Säurezahl: 168 mg KOH/g) wurden auf 200 °C erhitzt und anschließend der Schmelze 40 g Fumarsäure zugegeben. Das so erhaltene Reaktionsgemisch wurde weiter auf eine Temperatur von 215 °C erhitzt und für einen Zeitraum von 80 Minuten bei dieser Temperatur gehalten. Anschließend wurde auf eine Temperatur von 155 °C abgekühlt und dem Reaktionsgemisch wurden 1 g 4,4'-Thiobis(3-methyl-6-tert-butylphenol) und 2 g Jod zugeführt. Das Reaktionsgemisch wurde für einen Zeitraum von 30 Minuten bei der letztgenannten Temperatur belassen. Anschließend wurde auf eine Temperatur von 250 °C erhitzt. Bei dieser Temperatur wurden 30 g Glyzerin zugegeben und das Reaktionsgemisch für eine Zeitdauer von 110 Minuten bei dieser Temperatur gehalten. Anschließend wurde auf eine Temperatur von 215 °C abgekühlt und das Reaktionsgemisch mit 20 g Triethanolamin versetzt Nach 60 Minuten bei 215 °C wurde das Produkt ohne weitere Aufarbeitung dem Reaktionsgefäß entnommen. Das Reaktionsprodukt hatte einen Erweichungspunkt von 50 °C und eine Säurezahl von 115 mg KOH/g.

### 2a. Basisrezeptur für eine erfindungsgemäße Harzzubereitung

| | | |
|---|---|---|
| i) | Weichmacher | 15 Gew.-% |
| ii) | Carboxyliertes Tallharz Kolophonium aus Beispiel 1 | 50 Gew.-% |
| iii) | Tallharz-Triethylenglykolester | 35 Gew.-% |

### 2b. Herstellung einer erfindungsgemäßen Harzzubereitung

Der Weichmacher wurde in einem Rührwerk vorgelegt und auf 90 °C erwärmt. Anschließend wurde das auf 90 °C erwärmte carboxylierte Tallharz Kolophonium unter Rühren zugegeben. Diese Mischung wurde anschließend mit dem auf 60 °C erhitzten Tallharz-Triethylenglykolester versetzt und bei 90 °C für weitere 20 min durch Rühren homogenisiert.

### 3. Basisrezeptur für einen wasserbasierten PVC-Belag-Klebstoff

**Tabelle 1:**

| lfd. Nr. | Komponenten | Anteil (Gew.-%) |
|---|---|---|
| 1. | Butylacrylat-Copolymer-Dispersion mit einer Feststoff-Konzentration von 62 Gew.-% | 28,3 |
| 2. | Entschäumer, Silikonbasis | 0,04 |
| 3. | Konservierungsmittel, Kathon | 0,10 |
| 4. | Verdicker (Typ Hydroxyethylcellulose) | 0,20 |
| 5. | Emulgator (Typ Fettalkoholpolyglykolether) | 1,00 |
| 6. | Wasser | 6,00 |
| 7. | Polypropylenglykol, Molekulargewicht 1000 | 2,00 |
| 8. | Kreide, amorph (0 - 50 µm) | 29,40 |
| 9. | Kreide, kristallin (0 - 20 µm) | 13,20 |
| 10. | Harzzubereitung (2b) | 13,90 |
| 11. | Verdicker (Typ Polyacrylsäure) | 0,50 |
| 12. | Wasser | 5,36 |

Zur Herstellung eines erfindungsgemäßen Klebstoffs wurde 1 (lfd. Nr. aus Tabelle 1) im Mischbehälter vorgelegt und gerührt. Anschließend wurden 2 und 3 unter Rühren zugegeben und die Mischung homogenisiert. 4 wurde in einem separaten Gefäß mit 5 vermischt und anschließend dem Mischbehälter zugegeben. Das Gemisch um Mischbehälter wurde sorgfältig verrührt. Anschließend wurden 6, 7, 8 und 9 zugegeben und die Mischung glattgerührt. Darauffolgend wurde unter kräftigem Rühren die auf 80 °C erwärmte Harzzubereitung 10 zugegeben, der Ansatz homogenisiert und mit 11 versetzt. Die Viskosität wurde durch abschließende Zugabe von 12 eingestellt

Zu Vergleichszwecken wurde ein Fußbodenklebstoff gemäß der WO 98/56867 (Beispiel 2a) herangezogen.

**Tabelle 2:**

| | **Vergleichsbeispiel 1** | | **Vergleichsbeispiel 2** | | **Erfindungsgemäß** | |
|---|---|---|---|---|---|---|
| Typ Harzzubereitung | Harzmischung aus der WO 98/56867 | | Harzzubereitung aus der DE19831000C1 | | Harzmischung mit carboxyliertem Tallharz | |
| VOC-Gehalt | > 0,2 Gew.-% | | > 0,1 Gew.-% | | < 0,1 Gew.-% | |
| Einsatz in Fußbodenklebstoff für : | PVC-Beläge | Textil-Beläge | PVC-Beläge | Textil-Beläge | PVC-Beläge | Textil-Beläge |
| **Einarbeitbarkeit** | Gut | Gut | Gut | Gut | Gut | Gut |
| **Verstreichbar-keit/Rheologie** | Gut | Gut | Gut | Gut | Gut | Gut |
| **Nasstack** | Sehr gut | Gut | Sehr gut | Sehr gut | Gut | Gut |
| **Offene Zeit** | Gut | Gut | Mäßig gut | Gut | Gut | Gut |
| **Schälwiderstand** **(EN 1372)** | Gut | Gut | | | Gut | Sehr gut |
| **Scherfestigkeit** **(EN 1373)** | Sehr gut | Sehr gut | Schlecht | Mäßig | Gut | Sehr gut |
| **Harzgeruch** | Wahrnehmbar | Wahrnehmbar | Wahrnehmbar | Wahrnehmbar | Sehr gering | Sehr gering |

### 4. Prüfmethodenbeschreibung

### Einarbeitbarkeit der Harzschmelze Verstreichbarkeit

Die Parameter werden während der Laborversuche subjektiv nach Schulnoten beurteilt und anhand von Praxistest bestätigt.

### Tack / offene Zeit Methodenbeschreibung:

Auf einer vorgestrichenen und mit einer zementären Ausgleichmasse gespachtelten Spanplatte (1000 x 180 x 10) mm wird der zu prüfende Klebstoff mit Zahnleiste A3 aufgetragen (Klebstoffriefen quer zur Plattenlängsrichtung) und die Stoppuhr gestartet.

Nach 10 Minuten und in weiteren Abständen von 5 Minuten wird jeweils ein PVC-Belag-Streifen (200 x 45) mm in den Klebstoff eingelegt und mit einer 3,5 kg Andrückwalze angewalzt.

Sofort wird der Belag manuell wieder abgeschält und die Nassklebkraft (Tack) nach Schulnoten bewertet. Weiterhin wird die Benetzung der Belagrückseite mit Klebstoff festgehalten.

Der während der gesamten Prüfung maximal erreichte Tack wird notiert.

Das Ende der offenen Zeit ist am deutlichen Abfall der Benetzung erkennbar. Bei guten PVC-Belag-Klebstoffen wird eine offene Zeit von ca. 30 Minuten erwartet. Eine offene Zeit unter 15 Minuten wird als ungenügend bezeichnet.

## Patentansprüche

1. Emissionsarmer wässriger Dispersionsklebstoff enthaltend Wasser und ein wasserdispergierbares Polymeres, wobei der Dispersions-Klebstoff ein carboxyliertes Tallharz-Kolophonium enthält, das durch Umsetzung von Tallharz mit einer olefinisch ungesättigten Carbonsäure, Zugabe eines Disproportionierungsmittels, Veresterung mit einem Polyol und Zugabe eines Neutralisierungsmittels erhältlich ist.

2. Dispersionsklebstoff nach Anspruch 1, **dadurch gekennzeichnet, dass** er 20 bis 60 Gew.-% einer wässrigen Polymerdispersion, 1 bis 15 Gew.-% eines carboxylierten Tallharz-Kolophoniums und 15 bis 55 Gew.-% an Füllstoffen enthält.

3. Dispersionsklebstoff nach einem der Ansprüche 1 oder 2, **dadurch gekennzeichnet, dass** er einen Weichmacher enthält.

4. Dispersionsklebstoff nach einem der Ansprüche 1 bis 3, **dadurch gekennzeichnet, dass** er als Weichmacher Diethylenglykol- oder Dipropylenglykol-Dibenzoat enthält.

5. Dispersionsklebstoff nach einem der Ansprüche 1 bis 4, **dadurch gekennzeichnet, dass** er das carboxylierte Tallharz-Kolophonium in einer Menge von 1 bis 30 Gew.-%, bezogen auf den gesamten Klebstoff, enthält.

6. Dispersionsklebstoff nach einem der Ansprüche 1 bis 5, **dadurch gekennzeichnet, dass** er das carboxylierte Tallharz-Kolophonium in einer Menge von 2 bis 20 Gew.-%, bezogen auf den gesamten Klebstoff, enthält.

7. Dispersionsklebstoff nach einem der Ansprüche 1 bis 6, **dadurch gekennzeichnet, dass** er weniger als 1 Gew.-%, bezogen auf den gesamten Klebstoff, an flüchtigen organischen Verbindungen mit einem Siedepunkt von weniger als 150 °C enthält.

8. Verfahren zur Herstellung eines Klebstoffs gemäß einem der Ansprüche 1 bis 7, bei dem ein carboxyliertes Tallharz-Kolophonium mit einer wässrigen Dispersion eines Polymeren vermischt wird.

9. Verwendung des Dispersionsklebstoffes nach mindestens einem der Ansprüche 1 bis 7 zur Verklebung von Fußbodenbelägen.

## Claims

1. Low-emission aqueous dispersion adhesive comprising water and a water-dispersible polymer, the dispersion adhesive comprising a carboxylated tall rosin obtainable by reacting tall resin with an olefinically unsaturated carboxylic acid, adding a disproportionation agent and esterifying with a polyol and adding a neutralizing agent.

2. Dispersion adhesive according to claim 1, **characterized in that** it comprises 20 to 60 % by weight of an aqueous polymer dispersion, 1 to 15% by weight of a carboxylated tall resin colophony and 15 to 55 % by weight of a filler.

3. Dispersion adhesive according to claim 1 or 2, **characterized in that** it comprises a plasticizer.

4. Dispersion adhesive according to one of claims 1 to 3, **characterized in that** it comprises diethyleneglycol- or dipropyleneglycol dibenzoate as plasticizer.

5. Dispersion adhesive according to one of claims 1 to 4, **characterized in that** it comprises the carboxylated tall resin colophony in an amount of 1 to 30 % by weight, based on the total adhesive.

6. Dispersion adhesive according to one of claims 1 to 5, **characterized in that** it comprises the carboxylated tall resin colophony in an amount of 2 to 20 % by weight, based on the total adhesive.

7. Dispersion adhesive according to one of claims 1 to 6, **characterized in that** it comprises less than 1 % by weight, based on the total adhesive, of volatile organic compounds having a boiling point of less than 150 °C.

8. Process for the preparation of an adhesive according to one of claims 1 to 7, in which a carboxylated tall resin colophony is mixed with an aqueous dispersion of a polymer.

9. Use of a dispersion adhesive according to at least one of claims 1 to 7 for the adhesion of floor coverings.

## Revendications

1. Colle en dispersion aqueuse à faible taux d'émission contenant de l'eau et un polymère dispersible dans l'eau, la colle en dispersion contenant une colophane de résine d'huile de pin carboxylée que l'on peut obtenir par conversion de résine d'huile de pin avec un acide carboxylique oléfiniquement insaturé, addition d'un agent de disproportionnement, estérification avec un polyol et addition d'un agent de neutralisation.

2. Colle en dispersion selon la revendication 1, **caractérisée en ce qu'**elle contient de 20 à 60 % en poids d'une dispersion polymère aqueuse, de 1 à 15 % en poids d'une colophane de résine d'huile de pin carboxylée et de 15 à 55 % en poids de charges.

3. Colle en dispersion selon l'une quelconque des revendications 1 ou 2, **caractérisée en ce qu'**elle contient un plastifiant.

4. Colle en dispersion selon l'une quelconque des revendications 1 à 3, **caractérisée en ce qu'**elle contient, en tant que plastifiant, du dibenzoate de diéthylèneglycol ou de dipropylèneglycol.

5. Colle en dispersion selon l'une quelconque des revendications 1 à 4, **caractérisée en ce que** la colophane de résine d'huile de pin carboxylée qu'elle contient est présente dans une quantité de 1 à 30 % en poids par rapport au poids de colle total.

6. Colle en dispersion selon l'une quelconque des revendications 1 à 5, **caractérisée en ce que** la colophane de résine d'huile de pin carboxylée qu'elle contient est présente dans une quantité de 2 à 20 % en poids par rapport au poids de colle total.

7. Colle en dispersion selon l'une quelconque des revendications 1 à 6, **caractérisée en ce qu'**elle contient moins de 1 % en poids, par rapport au poids de colle total, de composés organiques volatils ayant un point d'ébullition inférieur à 150°C.

8. Procédé de fabrication d'une colle selon l'une quelconque des revendications 1 à 7, dans lequel on mélange une colophane de résine d'huile de pin carboxylée avec une dispersion aqueuse d'un polymère.

9. Utilisation de la colle en dispersion selon au moins l'une quelconque des revendications 1 à 7 pour coller des revêtements de sol.
